(19) **Europäisches Patentamt European Patent Office Office européen des brevets**

(11) **EP 4 338 986 B1**

(12) **EUROPÄISCHE PATENTSCHRIFT**

(45) Veröffentlichungstag und Bekanntmachung des Hinweises auf die Patenterteilung:
**04.03.2026  Patentblatt 2026/10**

(21) Anmeldenummer: **23195932.1**

(22) Anmeldetag: **07.09.2023**

(51) Internationale Patentklassifikation (IPC):
**B60D 1/62** (2006.01)

(52) Gemeinsame Patentklassifikation (CPC):
**B62D 53/04; B60D 1/36; B60D 1/62; B62D 53/08**

(54) **VERFAHREN ZUM KUPPELN EINER SATTELZUGMASCHINE MIT EINEM SATTELAUFLIEGER SOWIE SATTELZUG MIT EINER SATTELZUGMASCHINE UND EINEM SATTELAUFLIEGER**

METHOD FOR COUPLING A TRACTOR WITH A SEMI-TRAILER AND TRACTOR WITH A TRACTOR AND A SEMI-TRAILER

PROCÉDÉ POUR ACCOUPLER UNE SEMI-REMORQUE AVEC UNE SEMI-REMORQUE AINSI QUE SEMI-REMORQUE AVEC UN SEMI-REMORQUE ET UNE SEMI-REMORQUE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität:  **13.09.2022  DE 102022123359**

(43) Veröffentlichungstag der Anmeldung:
**20.03.2024  Patentblatt 2024/12**

(73) Patentinhaber: **JOST-Werke Deutschland GmbH 63263 Neu-Isenburg (DE)**

(72) Erfinder: **Saupe, Swen 55126 Mainz (DE)**

(74) Vertreter: **WSL Patentanwälte Partnerschaft mbB Kaiser-Friedrich-Ring 98 65185 Wiesbaden (DE)**

(56) Entgegenhaltungen:
**DE-A1- 102015 114 836      DE-A1- 102016 123 356 DE-A1- 102016 218 603      DE-A1- 102020 210 346 SE-A1- 2 051 032**

**Beschreibung**

Die vorliegende Erfindung betrifft ein Verfahren zum Kuppeln einer Sattelzugmaschine mit einem Sattelauflieger sowie einen Sattelzug mit einer Sattelzugmaschine und einem Sattelauflieger.

Unter einem Sattelzug wird insbesondere die Kombination aus einer Sattelzugmaschine und einem Sattelauflieger verstanden, wobei diese beiden Komponenten noch nicht gekuppelt sein müssen, um einen Sattelzug zu bilden. Ein Sattelzug ist beispielsweise aus DE 10 2019 202 352 A1, ein weiterer aus SE 2051032 A1 bekannt. Die DE 10 2020 210 346 A1 offenbart ein Rangiersystem zum Koppeln eines Zugfahrzeugs und eines Anhängers.

Sattelzüge sind für den Warentransport von großer Bedeutung. Dabei ist es üblich, dass eine Sattelzugmaschine und ein Sattelauflieger kein unveränderbares Gespann bilden, sondern je nach Bedarf eine Sattelzugmaschine mit verschiedenen Sattelaufliegern verbunden werden kann. Zu diesem Zweck weisen Sattelauflieger häufig einen genormten Königszapfen auf und die Sattelkupplung der Sattelzugmaschine ist darauf ausgelegt, diesen genormten Königszapfen aufnehmen zu können. Der Königszapfen ist in einem vorderen Bereich des Sattelaufliegers, der auch als Aufliegerhals bezeichnet wird, angeordnet. Sattelkupplung und Königszapfen werden im Rahmen eines Kupplungsvorgangs miteinander verbunden, woraufhin die Sattelzugmaschine den Sattelauflieger bewegen, insbesondere ziehen, kann. Ein Verfahren zum Kuppeln von Sattelzugmaschine und Sattelauflieger ist aus der KR 20200060650 A bekannt.

Es ist üblich, dass eine Sattelzugmaschine einen Sattelauflieger am Ende einer Fahrt abstellt, also von dem Sattelauflieger gelöst wird. Während der Sattelauflieger be- oder entladen wird, kann mit der Sattelzugmaschine ein anderer Sattelauflieger bewegt werden. Dadurch gibt es im Allgemeinen mehr Sattelauflieger als Sattelzugmaschinen. Damit Sattelauflieger abgestellt werden können, weisen sie in der Regel Stützwinden auf, welche die Stützfunktion übernehmen während keine Sattelzugmaschine mit dem Sattelauflieger gekuppelt ist.

Je nach Beladungszustand kann sich die Position und Orientierung des Aufliegers verändern. Insbesondere kann sich der Aufliegerhals nach unten durchbiegen, also entlang einer Querachse des Sattelaufliegers mittig tiefer liegen als an den Seiten des Sattelaufliegers. Als Folge davon ändert sich beispielsweise auch die absolute Höhe des Königszapfens über dem Untergrund, auf dem der Sattelauflieger steht. Wird ein Sattelauflieger beispielsweise leer abgestellt und anschließend beladen, kann es vorkommen, dass der Königszapfen nach dem Beladen wesentlich niedriger liegt als vor dem Beladen. Unter Umständen ist es dann nicht ohne Weiteres möglich, den Kupplungsvorgang zwischen einer Sattelzugmaschine und dem Sattelauflieger durchzuführen. Dies kann zu wesentlichen Verzögerungen beim Kuppeln von Sattelzugmaschine und Sattelauflieger führen.

Es war daher Aufgabe der Erfindung, das Kuppeln von Sattelzugmaschine und Sattelauflieger zu verbessern und insbesondere Verzögerungen bei dem Kuppeln zu vermeiden.

Diese Aufgabe wird durch ein Verfahren zum Kuppeln einer Sattelzugmaschine mit einem Sattelauflieger gemäß Anspruch 1 gelöst.

Bei dem Verfahren zum Kuppeln einer Sattelzugmaschine, insbesondere einer autonomen Sattelzugmaschine, mit einem Sattelauflieger wird eine Sattelkupplung der Sattelzugmaschine mit einem Königszapfen des Sattelaufliegers in einem Kupplungsvorgang derart verbunden, dass die Sattelzugmaschine den Sattelauflieger bewegen, insbesondere ziehen, kann. Vor dem Kupplungsvorgang wird in einem Analysevorgang ermittelt, ob der Kupplungsvorgang durchführbar ist und falls nicht, in einem Justiervorgang zumindest ein Teil des Sattelaufliegers automatisch um eine Querachse Y gekippt und optional eine absolute Höhe des Königszapfens automatisch verändert. Das Kippen um die Querachse Y kann auch als Nicken bezeichnet werden. Automatisch bedeutet dabei insbesondere, dass der jeweilige Vorgang nicht durch einen Menschen initiiert wird und insbesondere in Abhängigkeit eines Sensorsignals erfolgt. Der Analysevorgang wird bevorzugt ebenfalls automatisch ausgeführt, also insbesondere nicht manuell gestartet oder manuell beeinflusst. Dies ermöglicht ein vollautomatisiertes Kupplungsverfahren. Wird in dem Analysevorgang ermittelt, dass der Kupplungsvorgang durchführbar ist, so wird der Kupplungsvorgang bevorzugt ohne einen Justiervorgang durchgeführt.

Bei Geradeausfahrt bewegt sich ein Sattelzug entlang einer horizontalen Längsachse X. Eine Querachse Y des Sattelzugs verläuft hierzu senkrecht und horizontal. Die Querachse kann auch als Kippachse bezeichnet werden. Eine Hochachse Z des Sattelzugs verläuft senkrecht zu der Längsachse X und der Querachse Y, also vertikal.

Die Sattelkupplung umfasst insbesondere eine Sattelkupplungsplatte mit zwei nach hinten weisenden Hörnern, zwischen denen ein Kupplungsmaul gebildet wird. Das Kupplungsmaul führt zu einer Bucht, in welcher der Königszapfen im gekuppelten Zustand angeordnet ist. Die Sattelkupplung weist vorteilhafterweise eine Verriegelung auf, mittels welcher der Königszapfen in der Bucht gehalten wird. Eine geeignete Sattelkupplung ist beispielsweise in WO 99/50129 A1 beschrieben.

Der Sattelauflieger umfasst bevorzugt ein Fahrwerk mit einer oder mehreren Achsen, einen Aufliegerrahmen und einen auf dem Aufliegerrahmen angeordneten Aufbau, beispielsweise ein Aufliegerkoffer, ein Tank oder eine Mulde. Der Königszapfen ist bevorzugt in einem vorderen Bereich an dem Aufliegerrahmen befestigt. In dem vorderen Bereich des Aufliegerrahmens befinden sich vorteilhafterweise eine oder mehrere Stützwinden. Die Stützwinden bewirken, wenn sie ein- oder ausgefahren werden, gleichzeitig eine Veränderung der Höhe des Königszapfens und ein Kippen des Aufliegers um die Querachse. Die Stützwinden sind vorteilhafterweise entlang der Längsachse X hinter dem Königszapfen angeordnet.

Stützwinden weisen üblicherweise zwei verschiedene Getriebestufen auf, deren Gänge als Schnellgang und Lastgang bezeichnet werden. Im Schnellgang kann die Stützwinde nur wenig Kraft ausüben, dafür bewegt sich die Stützwinde vergleichsweise schnell (Übersetzung). Im Lastgang wird die Stützwinde nur langsam bewegt, kann dafür aber entsprechend höhere Lasten bewegen (Untersetzung), also insbesondere auch einen beladenen Sattelauflieger anheben und absenken. Eine geeignete, automatisch zwischen den Gängen umschaltende Stützwinde ist beispielsweise aus der EP 2 928 735 A1 bekannt.

Erfindungsgemäß wurde erkannt, dass es für einen reibungslosen und schnellen Ablauf des Kupplungsvorgangs von Vorteil ist, wenn vor dem eigentlichen Kupplungsvorgang geprüft wird, ob der Kupplungsvorgang möglich ist, ohne dass es beispielsweise zu einer Kollision von Sattelzugmaschine oder Sattelauflieger kommt. Dies wird durch den Analysevorgang ermittelt. Durch das automatische Verändern der Höhe des Königszapfens und/oder der Orientierung des Sattelaufliegers in Abhängigkeit von dem Analysevorgang wird ein zügiges Kuppeln von Sattelzugmaschine und Sattelauflieger möglich. Dadurch wird das Kuppeln insgesamt verbessert.

Der Kupplungsvorgang ist insbesondere dann durchführbar, wenn bei einer Rückwärtsfahrt der Sattelzugmaschine hin zu dem Sattelauflieger die Sattelkupplung mit ihrem Kupplungsmaul den Königszapfen derart aufnimmt, dass dieser in eine Bucht der Sattelkupplung gerät und die Sattelkupplung automatisch verriegelt wird oder manuell verriegelt werden kann. Der Kupplungsvorgang geschieht insbesondere durch eine Bewegung in einer Ebene senkrecht zur Hochachse Z. Es ist also keine gerade Rückwärtsfahrt der Sattelzugmaschine entlang der Längsachse X erforderlich. Vielmehr kann die Sattelzugmaschine derart manövriert werden, dass sie eine Kurvenbahn beschreibt. Entscheidend für die Durchführbarkeit ist, dass der Königszapfen zwischen die Kupplungshörner gerät.

Es können insbesondere zwei Fälle eintreten, in denen der Kupplungsvorgang nicht durchführbar ist. Im ersten Fall ist der Königszapfen relativ zu der Sattelkupplung zu hoch oder zu niedrig angeordnet, sodass im Kupplungsvorgang die Sattelkupplung und der Königszapfen nicht derart zusammenwirken können, dass der Königszapfen zwischen die Hörner gerät. Im zweiten Fall ist der Auflieger gegenüber einem austarierten Zustand nach vorne gekippt, der vordere Bereich des Sattelaufliegers ist also niedriger als im austarierten Zustand. In diesem Fall würde bei einer Rückwärtsfahrt die Sattelkupplung mit dem Sattelauflieger kollidieren und könnte selbst dann nicht zu dem Königszapfen gelangen, wenn der Königszapfen auf der richtigen absoluten Höhe liegt. Bei vorteilhaften Weiterbildungen des erfindungsgemäßen Verfahrens ist daher vorgesehen, dass in dem Analysevorgang ermittelt wird, ob eine Oberkante der Sattelkupplung, insbesondere eine hintere Oberkante der Sattelkupplung, in Vertikalrichtung, also entlang der Hochachse Z, höher oder niedriger als eine Unterkante des Sattelaufliegers, insbesondere eine vordere Unterkante eines Aufliegerrahmens, angeordnet ist. Alternativ oder zusätzlich ist vorgesehen, dass in dem Analysevorgang ermittelt wird, ob die Sattelkupplung und der Königszapfen in Vertikalrichtung so angeordnet sind, dass der anschließende Kupplungsvorgang durchführbar ist, wobei insbesondere ermittelt wird, ob der Königszapfen in Vertikalrichtung relativ zur Sattelkupplung zu niedrig oder zu hoch liegt. Auf diese Weise werden die beiden beschriebenen Fälle, in denen der Kupplungsvorgang nicht möglich ist, erkannt und infolgedessen der Justiervorgang ausgelöst.

Damit auch in den oben angegebenen Fällen der Kupplungsvorgang ermöglicht wird, ist bei vorteilhaften Weiterbildungen vorgesehen, dass in dem Justiervorgang die absolute Höhe des Königszapfens in Vertikalrichtung automatisch erhöht wird, wenn in dem Analysevorgang ermittelt wurde, dass der Königszapfen relativ zur Sattelkupplung zu niedrig liegt. Alternativ oder zusätzlich ist vorgesehen, dass in dem Justiervorgang die absolute Höhe des Königszapfens in Vertikalrichtung automatisch verringert wird, wenn in dem Analysevorgang ermittelt wurde, dass der Königszapfen relativ zur Sattelkupplung zu hoch liegt. Alternativ oder zusätzlich ist vorgesehen, dass in dem Justiervorgang eine absolute Höhe der Unterkante automatisch erhöht wird, wenn in dem Analysevorgang ermittelt wurde, dass die Oberkante der Sattelkupplung in Vertikalrichtung höher als die Unterkante angeordnet ist. Anders als im Stand der Technik wird vorliegend durch eine Justierung des Sattelaufliegers der Kupplungsvorgang ermöglicht. Dadurch wird es beispielsweise möglich, den Sattelauflieger schon zu Justieren, bevor die Sattelzugmaschine in dessen Nähe kommt, also beispielsweise während oder direkt nach dem Beladungsvorgang. Wenn dann die Sattelzugmaschine zu dem Sattelauflieger gefahren wird, ist die Höhe des Königszapfens und/oder die Höhe der Unterkante bereits derart eingestellt worden, dass der Kupplungsvorgang direkt möglich ist. Dadurch wird eine Zeitersparnis bei dem Kuppeln erzielt.

Sowohl die absolute Höhe des Königszapfens als auch die absolute Höhe der Unterkante kann durch ein Kippen des Sattelaufliegers um die Querachse Y verändert werden. Wird der Sattelauflieger nach vorne gekippt, so werden beide absoluten Höhen verringert, wird der Sattelauflieger nach hinten gekippt, so werden beide absoluten Höhen erhöht.

Für den Justiervorgang ist es von Vorteil, möglichst genaue Informationen über die relativen Höhenverhältnisse zwischen Sattelauflieger und Sattelzugmaschine zu erhalten. Bei vorteilhaften Weiterbildungen ist daher vorgesehen, dass in dem Analysevorgang eine Höhendifferenz zwischen der Sattelkupplung und dem Königszapfen, insbesondere als Differenz aus der absoluten Höhe der Sattelkupplung und einer absoluten Höhe des Königszapfens, ermittelt wird und in dem Justiervorgang die absolute Höhe des Königszapfens in Abhängigkeit von der Höhendifferenz automatisch erhöht oder verringert wird. Alternativ oder zusätzlich ist vorgesehen, dass in dem Analysevorgang eine Höhendifferenz zwischen der Oberkante und der Unterkante, insbesondere als Differenz aus einer absoluten Höhe der Oberkante und der absoluten Höhe der Unterkante, ermittelt wird und in dem Justiervorgang die absolute Höhe der Unterkante in Abhängigkeit von der Höhendifferenz automatisch erhöht wird. Auf diese Weise können in dem Justiervorgang präzise auf die tatsächlichen relativen Höhen berücksichtigt werden, was den Justiervorgang qualitativ verbessert.

Es hat sich gezeigt, dass die absoluten Höhen von Königszapfen und Unterkante auf verschiedene Arten und Weisen verändert werden können. Bei vorteilhaften Weiterbildungen ist vorgesehen, dass die absolute Höhe der Unterkante erhöht wird, indem eine Stützwinde des Sattelaufliegers ausgefahren wird, insbesondere im Lastgang, und/oder indem eine Luftfederung des Sattelaufliegers entlüftet wird und/oder indem ein Reifendruck mindestens eines Reifens des Sattelaufliegers, insbesondere eines Reifens einer letzten Achse, verringert wird. Alternativ oder zusätzlich ist vorgesehen, dass die absolute Höhe des Königszapfens erhöht wird, indem eine Stützwinde des Sattelaufliegers ausgefahren wird, insbesondere im Lastgang, und/oder indem eine Luftfederung des Sattelaufliegers entlüftet wird und/oder indem ein Reifendruck mindestens eines Reifens des Sattelaufliegers, insbesondere einer letzten Achse, verringert wird. Alternativ oder zusätzlich ist vorgesehen, dass die absolute Höhe des Königszapfens verringert wird, indem eine Stützwinde des Sattelaufliegers eingefahren wird, insbesondere im Lastgang, und/oder indem eine Luftfederung des Sattelaufliegers belüftet wird und/oder indem ein Reifendruck mindestens eines Reifens des Sattelaufliegers, insbesondere einer letzten Achse, erhöht wird. Das Ausfahren der Stützwinde bewirkt ein Kippen des Sattelaufliegers nach hinten. Zudem werden die absoluten Höhen von Königszapfen und Unterkante vergrößert. Bei einer automatisch umschaltenden Stützwinde wird die Stützwinde automatisch im Lastgang ausgefahren.

Erfindungsgemäß wurde erkannt, dass auch mittels der Luftfederung des Sattelaufliegers auf besonders einfache Art und Weise eine Anpassung der absoluten Höhe des Königszapfens und der absoluten Höhe der Unterkante möglich ist. Viele Sattelauflieger weisen eine Luftfederung auf, die den Aufliegerrahmen mit dem Fahrwerk oder einzelnen Achsen, insbesondere einer Liftachse, verbindet, insbesondere mittels Luftbälgen. Liftachsen werden beispielsweise bei einer Fahrt mit geringer Beladung oder ohne Beladung angehoben, um den Rollwiderstand des Sattelaufliegers zu verringern und auf diese Weise eine Treibstoffersparnis zu erzielen. Im Ausgangszustand ist der Sattelauflieger im vorderen Bereich von der Sattelstütze und im hinteren Bereich von den Rädern abgestützt. Wird nun die Luftfederung einer oder mehrerer der Achsen entlüftet, so senkt sich das Heck des Aufliegers ab. Der Federweg einer Luftfederung beträgt vorteilhafterweise zwischen 150 und 250 mm. Wird die Stützwinde weder ausnoch eingefahren, so kippt der Sattelauflieger nach hinten, wodurch sich sowohl die absolute Höhe des Königszapfens als auch die absolute Höhe der Unterkante erhöhen. Das variable Be- und Entlüften der Luftfederung ist bei vielen Sattelaufliegern ohnehin vorgesehen, was die Implementierung des erfindungsgemäßen Verfahrens wesentlich vereinfacht. Wenn zwischen der Stützwinde und der Luftfederung (bzw. ihrer Aufhängung) ein Abstand L1 besteht und zwischen der Unterkante und der Stützwinde in Längsrichtung X ein Abstand L2 und beträgt der Federweg der Luftfederung H1 in Vertikalrichtung, so wird folgende Höhenveränderung H2 der Unterkante in Vertikalrichtung erreicht:

$$H2 = (H1/L1) \cdot L2$$

Beispielsweise kann auf diese Weise bei einem Sattelauflieger mit L1 = 6430 mm und L2 = 4175 mm sowie H1 = 102 mm eine Höhenveränderung H2 von 66,2 mm erreicht werden. Dies kann bereits ausreichend sein, um die Abnahme der absoluten Höhe der Unterkante durch die Beladung auszugleichen.

Mit einer Entlüftung der Reifen kann ein ähnlicher Effekt erzielt werden. Bei manchen Sattelaufliegern ist bereits vorgesehen, dass der Reifendruck durch einen Kompressor am Sattelauflieger verändert wird, was beispielsweise von der Beladung abhängig gemacht werden kann. Durch ein Absenken des Reifendrucks lässt sich der Sattelauflieger nach hinten kippen und die absoluten Höhen von Königszapfen und Unterkante erhöhen. Bevorzugt wird der Druck aller Reifen einer Achse reduziert.

Die Entlüftung mittels der Luftfederung ist der Entlüftung der Reifen vorzuziehen, da das Volumen der in der Luftfederung vorgesehenen Luftbälge wesentlich geringer ist als das Volumen der einzelnen Reifen. Das Absenken und Anheben mittels der Luftfederung geht somit wesentlich schneller vonstatten als das Absenken und das anschließende Anheben mittels der Reifen.

Die Anpassung der absoluten Höhe des Königszapfens und der absoluten Höhe der Unterkante mittels der Luftfederung oder der Reifen bietet zudem die Möglichkeit, dass Stützwinden ohne Lasthebefunktion an dem Sattelauflieger vorgesehen werden können, die in der Anschaffung günstiger sind und weniger Energie verbrauchen.

Auch eine Kombination der verschiedenen Einflussgrößen ist möglich. Wird beispielsweise die Luftfederung entlüftet und die Stützwinde eingefahren, so wird der Sattelauflieger nicht gekippt. Vielmehr wird bei richtiger Ansteuerung der Aufbau des Sattelaufliegers in vertikaler Richtung, also entlang der Hochachse Z, nach unten verfahren, wodurch auch die absoluten Höhen von Königszapfen und Unterkante verringert werden. Der umgekehrte Fall ist ebenso möglich.

Bei vorteilhaften Weiterbildungen ist vorgesehen, dass in dem Analysevorgang die absolute Höhe der Unterkante und/oder die absolute Höhe der Oberkante und/oder die absolute Höhe des Königszapfens und/oder die absolute Höhe der Sattelkupplung und/oder die Höhendifferenz, insbesondere ohne Ermittlung der absoluten Höhen, von dem Sattelauflieger und/oder von der Sattelzugmaschine ermittelt wird, insbesondere mittels mindestens eines Sensors, beispielsweise einer Kamera. Es ist von Vorteil, wenn zumindest ein Teil der genannten Größen von dem Sattelauflieger selbst ermittelt wird. Dadurch kann die Justierung des Aufliegers bereits vorgenommen werden, wenn die Sattelzugmaschine noch nicht unmittelbar vor dem Sattelauflieger angeordnet ist. Aus finanzieller Sicht kann es hingegen von Vorteil sein, wenn die Sensorik Teil der Sattelzugmaschine ist. Grund hierfür ist, dass die Anzahl der Sattelauflieger in Unternehmen regelmäßig größer ist als die Anzahl der Sattelzugmaschinen, da die Sattelzugmaschinen mit verschiedenen Sattelaufliegern eingesetzt werden und die Sattelauflieger Standzeiten haben. Soll eine Flotte mit einer Vorrichtung zur Durchführung des erfindungsgemäßen Verfahrens ausgerüstet werden, so ist es kostengünstiger, wenn nur die Sattelzugmaschinen und nicht die Sattelauflieger ausgerüstet werden.

Neben einer Kamera können auch andere Sensoren zum Einsatz kommen, so beispielsweise Abstandssensoren, die beispielsweise im Bereich des Königszapfens angeordnet und auf den Boden ausgerichtet sind, und/oder ein Neigungsmesser, der die Neigung des Sattelaufliegers um die Querachse Y erfassen kann.

Sattelauflieger und/oder Sattelzugmaschine weisen bei vorteilhaften Weiterbildungen eine Steuereinrichtung auf. Die jeweilige Steuereinrichtung ist vorteilhafterweise mit dem Sensor oder den Sensoren verbunden.

Je nachdem, welche Messwerte (der absoluten Höhen und/oder Höhendifferenzen) von der Sattelzugmaschine oder dem Sattelauflieger ermittelt wurden, ist es von Vorteil, wenn ein Austausch dieser Informationen stattfindet. Bei vorteilhaften Weiterbildungen des erfindungsgemäßen Verfahrens ist daher vorgesehen, dass von dem Sattelauflieger ermittelte Messwerte an die Sattelzugmaschine und/oder von der Sattelzugmaschine ermittelte Messwerte an den Sattelauflieger übermittelt werden. Es ist ferner möglich, dass der Sattelauflieger auf Basis von übermittelten Messwerten eigenständig den Justiervorgang durchführt. Alternativ kann die Sattelzugmaschine auf Basis der Messwerte ein Justiersignal an den Sattelauflieger übermitteln, woraufhin dort der Justiervorgang in Abhängigkeit des Justiersignals durchgeführt wird. Beispielsweise ist es möglich, dass die Sattelzugmaschine eigenständig die Höhendifferenz zwischen der Oberkante und der Unterkante ermittelt und dem Sattelauflieger durch das Justiersignal den Auftrag übermittelt, die ermittelte Höhendifferenz auszugleichen, woraufhin der Sattelauflieger den entsprechenden Justiervorgang durchführt.

Bei vorteilhaften Weiterbildungen wird in dem Analysevorgang durch den Sattelauflieger und/oder die Sattelzugmaschine, insbesondere der Steuereinrichtung, auf Basis der absoluten Höhe des Königszapfens und/oder der absoluten Höhe der Sattelkupplung und/oder der absoluten Höhe der Oberkante und/oder der absoluten Höhe der Unterkante und/oder der Höhendifferenz ein Differenzwert für die Stützwinde, die Luftfederung und/oder die Reifen ermittelt. Im Falle der Stützwinde ist der Differenzwert insbesondere ein Verfahrweg, im Falle der Luftfederung insbesondere ein Federweg und/oder ein Luftdruck in den Luftbälgen und im Falle der Reifen insbesondere der Innendruck der Reifen. Bei der Ermittlung des Differenzwerts werden insbesondere aufliegerspezifische Kennwerte herangezogen. Zu diesen Kennwerten zählen beispielsweise ein entlang der Längsachse X gemessener Abstand zwischen Unterkante und Stützwinde, ein entlang der Längsachse X gemessener Abstand zwischen Stützwinde und Luftfederung und/oder Achsaufhängung der Reifenachse, ein entlang der Längsachse X gemessener Abstand zwischen der Unterkante und dem Königszapfen, ein entlang der Längsachse X gemessener Abstand zwischen dem Königszapfen und der Luftfederung und/oder der Achsaufhängung der Reifenachse, und/oder ein entlang der Längsachse X gemessener Abstand zwischen Unterkante und Luftfederung und/oder Achsaufhängung der Reifenachse. Wie oben erwähnt, kann die Stützwinde bei einem Kippen des Aufliegers den Drehpunkt bilden. Sind die oben genannten Kennwerte zumindest teilweise bekannt, so kann ermittelt werden, wie weit beispielsweise die Luftfederung entlüftet werden muss, damit die Unterkante um einen vorgegebenen Wert nach oben bewegt wird.

Wie oben erwähnt, wird nach dem Analysevorgang ein Justiervorgang durchgeführt, wenn in dem Analysevorgang ermittelt wurde, dass dies nötig ist. Bei vorteilhaften Weiterbildungen ist vorgesehen, dass nach jedem Justiervorgang ein Analysevorgang durchgeführt wird. Auf diese Weise wird nach jedem Justiervorgang erneut geprüft, ob der Kupplungsvorgang möglich ist. Dadurch findet nicht nur eine einfache Steuerung der absoluten Höhen, sondern eine Regelung statt, die so lange ausgeführt wird, bis die gewünschten Höhen erreicht sind. Auf diese Weise wird sichergestellt, dass durch den Justiervorgang tatsächlich die notwendigen Maßnahmen getroffen wurden, um den Kupplungsvorgang zu ermöglichen.

Die Aufgabe der Erfindung wird auch durch einen Sattelzug mit einer Sattelzugmaschine und einem Sattelauflieger gelöst, wobei die Sattelzugmaschine eine Sattelkupplung und der Sattelauflieger einen Königszapfen umfasst, wobei die Sattelkupplung und der Königszapfen in einem Kupplungsvorgang derart miteinander kuppelbar sind, dass die Sattelzugmaschine den Sattelauflieger bewegen kann, wobei der Sattelauflieger ein Hubsystem umfasst, mittels dem zumindest ein Teil des Sattelaufliegers um eine Querachse kippbar und optional eine absolute Höhe des Königszapfens einstellbar ist. Die Sattelzugmaschine und/oder der Sattelauflieger weist mindestens einen Sensor und mindestens eine Steuereinrichtung auf. Der Sensor ist eingerichtet, eine absolute Höhe einer Oberkante der Sattelkupplung und/oder eine absolute Höhe einer Unterkante des Sattelaufliegers und/oder eine absolute Höhe des Königszapfens und/oder eine absolute Höhe der Sattelkupplung und/oder eine Höhendifferenz zwischen der Oberkante und der Unterkante und/oder eine Höhendifferenz zwischen dem Königszapfen und der Sattelkupplung zu erfassen. Die Steuereinrichtung ist eingerichtet, das Hubsystem in Abhängigkeit von einem Signal des Sensors zu betätigen. Bevorzugt ist der Sattelzug eingerichtet, das erfindungsgemäße Verfahren auszuführen.

Das Hubsystem des Sattelaufliegers umfasst bevorzugt mindestens eine Stützwinde und/oder die Luftfederung, insbesondere Luftbälge mindestens einer Achse und/oder die Reifen mindestens einer Achse. Zum Belüften der Luftbälge und der Reifen umfasst das Hubsystem vorteilhafterweise mindestens einen Kompressor. Zum Entlüften umfasst das Hubsystem vorteilhafterweise mindestens ein mit der Steuereinrichtung verbundenes, steuerbares Ventil. Zum Ein- und Ausfahren der Stützwinden ist vorteilhafterweise mindestens ein mit der Steuereinrichtung verbundener Antrieb vorgesehen.

Mittels des mindestens einen Sensors und der Steuereinrichtung kann der Analysevorgang durchgeführt werden. Mittels der Steuereinrichtung und des Hubsystems ist die Durchführung des Justiervorgangs möglich. Der Kupplungsvorgang wird mittels der Sattelkupplung und dem Königszapfen durchgeführt.

Durch den erfindungsgemäßen Sattelzug werden die gleichen Vorteile erzielt, wie sie oben hinsichtlich des erfindungsgemäßen Verfahrens beschrieben wurden. Der Sattelzug kann durch die oben im Zusammenhang mit dem Verfahren angegebenen konstruktiven Merkmale weitergebildet werden.

Wie oben erwähnt, ist es von Vorteil, wenn die Sattelzugmaschine und der Sattelauflieger Informationen hinsichtlich der absoluten Höhen und/oder der Höhendifferenzen austauschen können. Bei vorteilhaften Weiterbildungen ist daher vorgesehen, dass die Sattelzugmaschine und der Sattelauflieger jeweils mindestens eine Kommunikationseinheit aufweisen, wobei die Kommunikationseinheiten eingerichtet sind, miteinander zu kommunizieren. Die Kommunikation kann unmittelbar, beispielsweise mittels Bluetooth, oder mittelbar, beispielsweise über eine Satellitenkommunikation, vonstattengehen.

Die Kommunikationseinheit der Sattelzugmaschine ist bei vorteilhaften Weiterbildungen ein Sender und die Kommunikationseinheit des Sattelaufliegers ein Empfänger. Alternativ kann die Kommunikationseinheit der Sattelzugmaschine ein Empfänger und die Kommunikationseinheit des Sattelaufliegers ein Sender sein. Ebenfalls alternativ ist zumindest eine der Kommunikationseinheiten eine kombinierte Senderempfängereinheit, insbesondere ein Transponder. Durch Transponder können Informationen in beide Richtungen ausgetauscht werden, was für die kontinuierliche Regelung von Vorteil ist.

Bei besonders vorteilhaften Weiterbildungen ist die Sattelzugmaschine autonom, insbesondere autonom gemäß Level 5 gemäß SAE-Standard J3016. Das erfindungsgemäße Verfahren ist besonders für autonome Sattelzugmaschinen geeignet, da die Justierung des Sattelaufliegers ohne Einwirken einer Person vorgenommen werden kann.

Das erfindungsgemäße Verfahren wird bevorzugt mittels des beschriebenen Sattelzugs durchgeführt.

Die Erfindung wird nachfolgend anhand der Zeichnungen beispielhaft dargestellt und erläutert. Es zeigt dabei:

Figur 1   eine Ausführungsform eines Sattelzugs in einer schematischen Seitenansicht vor einem Justiervorgang

Figur 2   den Sattelzug der Figur 1 in einer schematischen Seitenansicht nach einem Justiervorgang

Figur 3   eine weitere Ausführungsform eines Sattelzugs in einer schematischen Seitenansicht

Figur 4   den Ablauf eines Verfahrens zum Kuppeln einer Sattelzugmaschine mit einem Sattelauflieger gemäß einer Ausführungsform

Figur 5   eine weitere Ausführungsform eines Sattelzugs in einer schematischen Seitenansicht

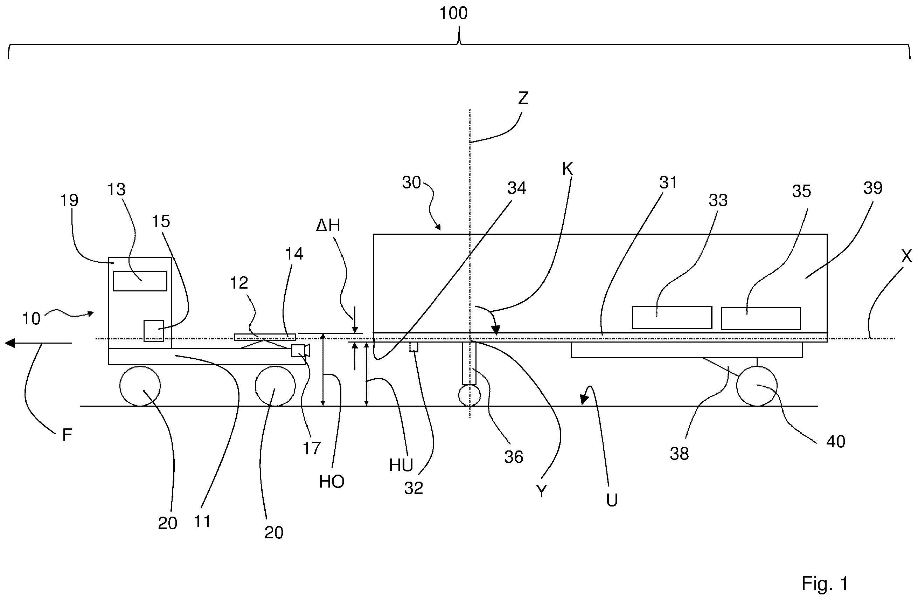

Der in der Figur 1 dargestellte Sattelzug 100 umfasst eine Sattelzugmaschine 10 und einen Sattelauflieger 30. In dem dargestellten Zustand sind die Sattelzugmaschine 10 und der Sattelauflieger 30 nicht miteinander gekuppelt. Dargestellt ist also der Zustand vor dem Kupplungsvorgang. Sattelzugmaschine 10 und Sattelauflieger 30 stehen auf einem gemeinsamen Untergrund U.

Die Sattelzugmaschine weist einen Fahrzeugrahmen 11, auch Chassis genannt, auf, das von einem Fahrwerk mit Rädern 20 getragen wird. Auf dem Fahrzeugrahmen 11 ist ein Fahrerhaus 19 angeordnet. Das Fahrerhaus 19 ist in einem vorderen Bereich der Sattelzugmaschine 10 angeordnet. Bei Geradeausfahrt bewegt sich die Sattelzugmaschine 10 in Fahrtrichtung F entlang einer Längsachse X. Im hinteren Bereich umfasst die Sattelzugmaschine eine Sattelkupplung 12. Die Sattelkupplung 12 ist ebenfalls auf dem Fahrzeugrahmen 11 angeordnet. Die Sattelkupplung 12 weist eine Sattelkupplungsplatte mit zwei ein Kupplungsmaul bildenden Hörnern und einer Bucht auf (nicht sichtbar).

Die Sattelzugmaschine umfasst ferner eine Kommunikationseinheit 13 und eine Steuereinrichtung 15.

Der Sattelauflieger 30 umfasst einen Aufliegerrahmen 31, auf dem ein Aufbau 39, hier ein Aufliegerkoffer, angeordnet ist. Im hinteren Bereich weist der Sattelauflieger 30 ein Fahrwerk mit einer schematisch dargestellten Luftfederung 38 und Reifen 40 auf. Die Luftfederung 38 umfasst nicht näher dargestellte Luftbälge. Bei der gezeigten Ausführungsform weist der Sattelauflieger 30 nur eine einzelne Achse mit mehreren Reifen 40 auf, wobei aufgrund der Seitenansicht nur ein Reifen 40 sichtbar ist. Bei anderen Ausführungsformen kann der Sattelauflieger 30 auch mehrere Achsen mit Reifen 40 aufweisen.

In einem vorderen Bereich des Sattelaufliegers 30 sind an dem Aufliegerrahmen 31 ein Königszapfen 32 und eine Stützwinde 36 angeordnet. Die Stützwinde 36 verläuft entlang einer Hochachse Z und ist entlang der Längsachse hinter dem Königszapfen 32 angeordnet.

Der Sattelauflieger 30 weist ein Hubsystem auf, welches die Stützwinde 36, die Luftfederung 38 und die Reifen 40 umfasst. Alternativ zum Entlüften der Luftfederung 38 können auch die Reifen 40 entlüftet oder die Stützwinde 36 ausgefahren werden.

Die Sattelkupplung 12 und der Königszapfen 32 sind derart aufeinander abgestimmt, dass sie grundsätzlich gekuppelt werden können, wodurch der Sattelauflieger 30 von der Sattelzugmaschine 10 bewegt werden kann.

Der Sattelauflieger 30 umfasst ferner eine Kommunikationseinheit 33 und eine Steuereinrichtung 35.

Die Sattelkupplung 12 weist an ihrem hinteren Ende eine Oberkante 14 auf. Die Oberkante 14 kann beispielsweise eine Kante eines der Hörner sein. Der Aufliegerrahmen 31 weist an seinem vorderen Ende eine Unterkante 34 auf. Die Oberkante 14 weist gegenüber dem Untergrund U, auf welchem die Sattelzugmaschine 10 und der Sattelauflieger 30 stehen, eine absolute Höhe HO auf. Die Unterkante 34 weist gegenüber dem Untergrund U eine absolute Höhe HU auf. Zwischen den absoluten Höhen HO, HU besteht eine Höhendifferenz ΔH, die in dem in Figur 1 dargestellten Zustand positiv ist (HO > HU). Die Sattelzugmaschine 10 umfasst einen Sensor 17 in Form einer Kamera, mittels der die Höhendifferenz ΔH erfasst werden kann. Die Position des Sensors 17 relativ zu der Oberkante 14 ist bekannt. Fährt die Sattelzugmaschine 10 rückwärts an den Sattelauflieger 30 heran, kann in einem Analysevorgang mittels des Kamerabildes des Sensors 17 ermittelt werden, wo sich die Unterkante 34 relativ zu der Oberkante 14 befindet und daraus auf die Höhendifferenz ΔH geschlossen werden.

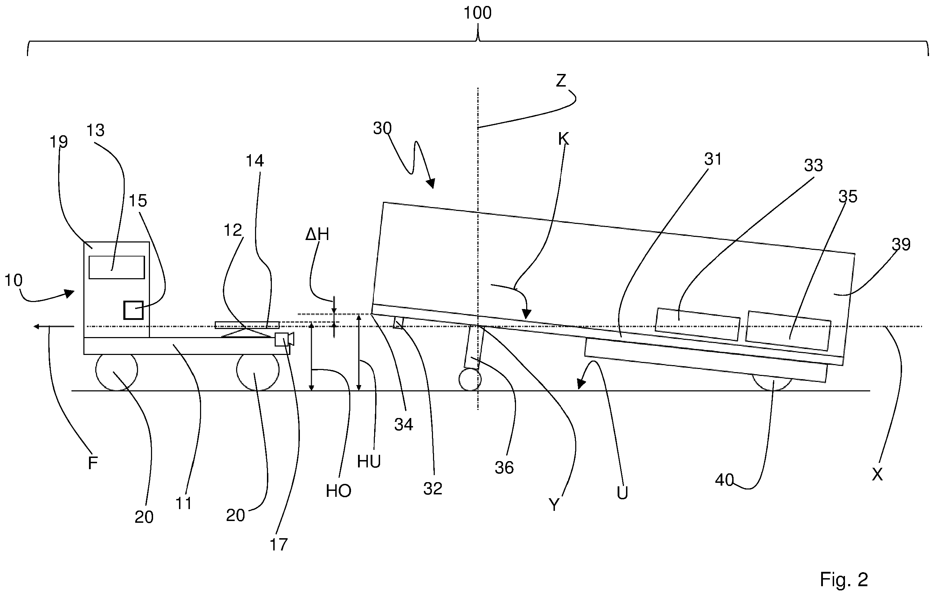

Wurde ermittelt, dass eine positive Höhendifferenz ΔH besteht, dass also die Oberkante 14 höher liegt als die Unterkante 34, so kann diese Information von der Steuereinrichtung 15 verarbeitet und mittels der Kommunikationseinheit 13 an die Kommunikationseinheit 33 des Sattelaufliegers 30 übermittelt werden. Von dem Sattelauflieger 30 wird diese Information durch die Steuereinrichtung 35 verarbeitet. Die Steuereinrichtung 35 übermittelt dann in einem Justiervorgang ein Signal an die Luftfederung 38, welche daraufhin entlüftet wird. Daraufhin stellt sich der in Figur 2 dargestellte Zustand ein. Der Sattelauflieger 30 wurde um eine Querachse Y, welche senkrecht zu der Längsachse X und der Hochachse Z verläuft, entsprechend einer Kippbewegung K gekippt. Der Sattelauflieger 30 wird auf diese Weise justiert. Da sich die Unterkante 34 vor der Querachse Y und die Luftfederung 38 hinter der Querachse Y befindet, wird die Unterkante 34 beim Entlüften der Luftfederung 38 angehoben. Die absolute Höhe HU der Unterkante 34 wird also erhöht.

Anschließend kann in einem weiteren Analysevorgang mittels des Sensors 17 erneut die Höhendifferenz ΔH ermittelt werden. Bei dem in Figur 2 dargestellten Zustand ergibt sich eine negative Höhendifferenz ΔH, da die absolute Höhe HU der Unterkante 34 größer ist als die absolute Höhe HO der Oberkante 14. Diese Information kann beispielsweise mittels der Steuereinrichtung 15 an den Fahrer übermittelt werden, beispielsweise kann sie auf einem Bildschirm im Fahrerhaus 19 angezeigt werden. Der Fahrer kann daraufhin den Kupplungsvorgang durchführen, die Sattelzugmaschine 10 also rückwärts entgegen der Fahrtrichtung F bewegen, sodass die Sattelkupplung 12 unter den Aufliegerrahmen 31 geschoben wird und den Königszapfen 32 zwischen den Hörnern aufnimmt.

Bei anderen Ausführungsformen wird die Sattelzugmaschine autonom betrieben, also ohne Fahrer. In diesen Fällen kann mittels der Steuereinrichtung 15 der Kupplungsvorgang automatisch gestartet werden.

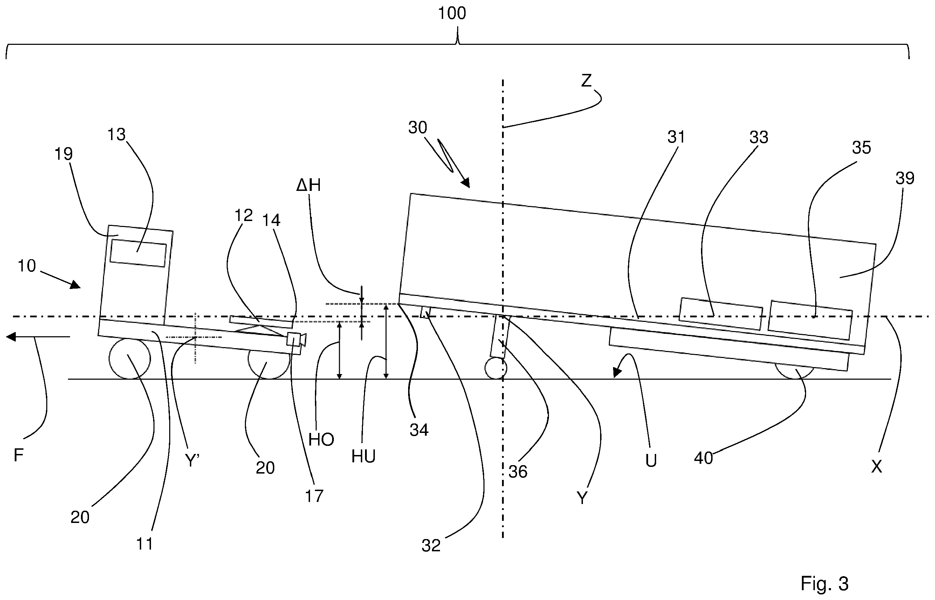

Bei der in Figur 3 dargestellten Ausführungsform sind die Sattelzugmaschine 10 und der Sattelauflieger 30 grundsätzlich mit denjenigen der Figur 1 identisch. Zusätzlich ist vorgesehen, dass auch die Sattelzugmaschine 10 ein Hubsystem umfasst, mittels der sie um eine Kippachse Y' der Sattelzugmaschine 10 gekippt werden kann.

Mittels des Sensors 17 wird auch hier eine Höhendifferenz ΔH zwischen der absoluten Höhe HO der Oberkante 14 und der absoluten Höhe HU der Unterkante 34 ermittelt. Zusätzlich zu dem Kippen des Sattelauflieger 30 wird in Abhängigkeit von dem Sensorsignal des Sensors 17 die Sattelzugmaschine 10 um die Kippachse Y' gekippt, wodurch die absolute Höhe HO der Oberkante 14 verringert wird. Auch dadurch wird der Kupplungsvorgang ermöglicht.

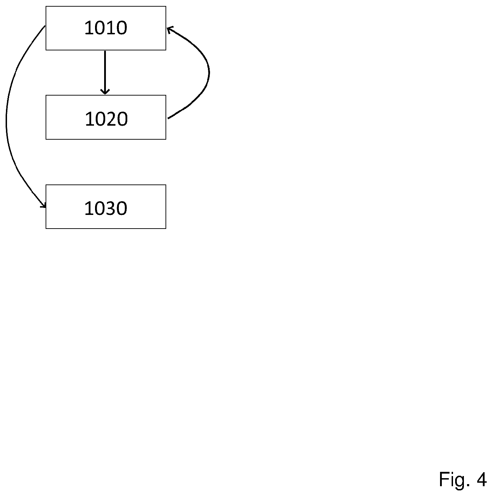

Die Figur 4 zeigt schematisch eine Ausführungsform des erfindungsgemäßen Verfahrens. In einem Analysevorgang 1010 wird ermittelt, ob ein Kupplungsvorgang 1030 zwischen einem Sattelauflieger 30 und einer Sattelzugmaschine 10 möglich ist. Wird in dem Analysevorgang 1010 festgestellt, dass der Kupplungsvorgang 1030 nicht durchführbar ist, so wird in einem Justiervorgang 1020 eine absolute Höhe des Königszapfens automatisch verändert und/oder zumindest ein Teil des Sattelaufliegers um eine Querachse gekippt. Wird hingegen in dem Analysevorgang 1010 festgestellt, dass der Kupplungsvorgang 1030 möglich ist, so wird automatisch der Kupplungsvorgang 1030 durchgeführt.

Nach dem Justiervorgang 1020 wird erneut ein Analysevorgang 1010 durchgeführt, um zu ermitteln, ob durch den Justiervorgang 1020 der Kupplungsvorgang 1030 ermöglicht wurde.

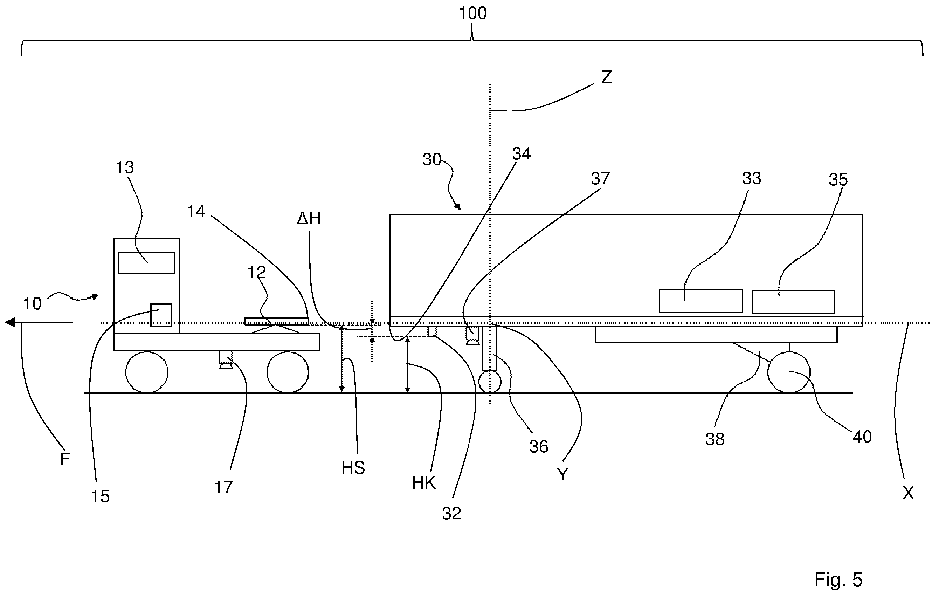

Der in Figur 5 dargestellte Sattelzug 100 entspricht in weiten Teilen dem in Figur 1 dargestellten Sattelzug 100. Zusätzlich ist bei der in Figur 5 gezeigten Ausführungsform an dem Sattelauflieger 30 ein Sensor 37 in Form eines Abstandssensors vorgesehen. Der Sattelauflieger 30 weist ferner einen nicht dargestellten Neigungsmesser auf. Durch den Sensor 37 und den Neigungsmesser kann eine absolute Höhe HK des Königszapfens 32 im Rahmen eines Analysevorgangs ermittelt werden.

Der Sensor 17 der Sattelzugmaschine 10 ist bei der in Figur 5 dargestellten Ausführungsform ebenfalls ein Abstandssensor. Auch die Sattelzugmaschine 10 weist hier einen nicht dargestellten Neigungssensor auf. Mittels dem Sensor 17 und dem Neigungsmesser kann eine absolute Höhe HS der Sattelkupplung 12 im Rahmen eines Analysevorgangs ermittelt werden.

Die Höhendifferenz zwischen der Sattelkupplung 12 und dem Sensor 17 ist als Kennwert der Sattelzugmaschine bekannt. Gleiches gilt für die Höhendifferenz zwischen dem Königszapfen 32 und dem Sensor 37. Auf diese Weise kann aus den jeweiligen Abstandsmesswerten und den Messwerten des Neigungssensors auf die jeweilige absolute Höhe HK, HS geschlossen werden.

Mittels der Kommunikationseinheiten 13, 33 und ihrer Steuereinrichtungen 15, 35 können die Sattelzugmaschine 10 und der Sattelauflieger 30 Messwerte zu den absoluten Höhen HK, HS austauschen. Beispielsweise kann der von dem Sensor 17 gemessene Messwert für die absolute Höhe HS der Sattelkupplung an den Sattelauflieger 30 übermittelt werden, woraufhin die Steuereinrichtung 35 aus den Messwerten der absoluten Höhen HK, HS die Höhendifferenz ΔH bestimmt (HS - HK = ΔH).

Stellt die Steuereinrichtung 35 im Rahmen des Analysevorgangs fest, dass die Sattelkupplung 12 höher liegt als der Königszapfen 32, so übermittelt sie ein Justiersignal an das Hubsystem, also die Stützwinde 36, die Luftfederung 38 und/oder die Reifen 40. Beispielsweise kann dann die Stützwinde 36 ausgefahren und die Luftfederung 38 belüftet, also hochgefahren, werden. Auf diese Weise wird die absolute Höhe HK des Königszapfens 32 vergrößert. Anschließend können erneut mittels der Sensoren 17, 37 die absoluten Höhen HK, HS erfasst und die Höhendifferenz ΔH ermittelt werden. Besteht weiterhin eine positive Höhendifferenz ΔH, ist also die absolute Höhe HS der Sattelkupplung größer als die absolute Höhe HK, so wird die Stützwinde 36 beispielsweise weiter ausgefahren und die Luftfederung 38 wird weiter belüftet. Wird ermittelt, dass die Sattelkupplung 12 und der Königszapfen 32 auf der gleichen Höhe liegen und somit der Kupplungsvorgang möglich ist, so wird das als Signal an die Sattelzugmaschine 10 übermittelt, woraufhin die Steuereinrichtung 15 beispielsweise automatisch den Kupplungsvorgang starten kann.

**Bezugszeichenliste**

| 10 | Sattelzugmaschine |
|---|---|
| 11 | Fahrzeugrahmen |
| 12 | Sattelkupplung |
| 13 | Kommunikationseinheit |
| 14 | Oberkante |
| 15 | Steuereinrichtung |
| 17 | Sensor |
| 19 | Fahrerhaus |
| 20 | Räder |
| 30 | Sattelauflieger |
| 31 | Aufliegerrahmen |
| 32 | Königszapfen |
| 33 | Kommunikationseinheit |
| 34 | Unterkante |
| 35 | Steuereinrichtung |
| 36 | Stützwinde |
| 37 | Sensor |
| 38 | Luftfederung |
| 39 | Aufbau |
| 40 | Reifen |
| 100 | Sattelzug |
| 1010 | Analysevorgang |
| 1020 | Justiervorgang |
| 1030 | Kupplungsvorgang |
| F | Fahrtrichtung |
| K | Kippbewegung |
| U | Untergrund |
| X | Längsachse |
| Y | Querachse |
| Y' | Kippachse |
| Z | Hochachse |

**Patentansprüche**

1. Verfahren zum Kuppeln einer Sattelzugmaschine (10), insbesondere einer autonomen Sattelzugmaschine (10), mit einem Sattelauflieger (30) bei dem eine Sattelkupplung (12) der Sattelzugmaschine (10) mit einem Königszapfen (32) des Sattelaufliegers (30) in einem Kupplungsvorgang (1030) derart verbunden wird, dass die Sattelzugmaschine (10) den Sattelauflieger (30) bewegen, insbesondere ziehen kann,

**dadurch gekennzeichnet,**

**dass** vor dem Kupplungsvorgang (1030) in einem Analysevorgang (1010) ermittelt wird, ob der Kupplungsvorgang (1030) durchführbar ist und falls nicht, in einem Justiervorgang (1020) zumindest ein Teil des Sattelaufliegers (30) automatisch um eine Querachse (Y) gekippt wird und optional eine absolute Höhe des Königszapfens (32) automatisch verändert wird.

2. Verfahren nach Anspruch 1,
   **dadurch gekennzeichnet,**
   **dass** in dem Analysevorgang (1010) ermittelt wird, ob eine Oberkante (14) der Sattelkupplung (12), insbesondere eine hintere Oberkante (14) der Sattelkupplung (12), in Vertikalrichtung höher oder niedriger als eine Unterkante (34) des Sattelaufliegers (30), insbesondere eine vordere Unterkante (34) eines Aufliegerrahmens (31), angeordnet ist und/oder dass in dem Analysevorgang (1010) ermittelt wird, ob die Sattelkupplung (12) und der Königszapfen (32) in Vertikalrichtung so angeordnet sind, dass der anschließende Kupplungsvorgang (1030) durchführbar ist, wobei insbesondere ermittelt wird, ob der Königszapfen (32) in Vertikalrichtung relativ zur Sattelkupplung (12) zu niedrig oder zu hoch liegt.

3. Verfahren nach Anspruch 2,
   **dadurch gekennzeichnet,**
   **dass** in dem Justiervorgang (1020) eine absolute Höhe (HK) des Königszapfens (32) in Vertikalrichtung automatisch erhöht wird, wenn in dem Analysevorgang (1010) ermittelt wurde, dass der Königszapfen (32) relativ zur Sattelkupplung (12) zu niedrig liegt und/oder dass in dem Justiervorgang (1020) die absolute Höhe (HK) des Königszapfens (32) in Vertikalrichtung automatisch verringert wird, wenn in dem Analysevorgang (1010) ermittelt wurde, dass der Königszapfen (32) relativ zur Sattelkupplung (12) zu hoch liegt und/oder dass in dem in dem Justiervorgang (1020) eine absolute Höhe (HU) der Unterkante (34) automatisch erhöht wird, wenn in dem Analysevorgang (1010) ermittelt wurde, dass die Oberkante (14) der Sattelkupplung (12) in Vertikalrichtung höher als die Unterkante (34) angeordnet ist.

4. Verfahren nach einem der vorhergehenden Ansprüche,
   **dadurch gekennzeichnet,**

   **dass** in dem Analysevorgang (1010) eine Höhendifferenz (ΔH) zwischen der Sattelkupplung (12) und dem Königszapfen (32), insbesondere als Differenz aus einer absoluten Höhe (HS) der Sattelkupplung (12) und einer absoluten Höhe des Königszapfens (32), ermittelt wird und in dem Justiervorgang (1020) die absolute Höhe (HK) des Königszapfens (32) in Abhängigkeit von der Höhendifferenz (ΔH) automatisch erhöht oder verringert wird und/oder
   **dass** in dem Analysevorgang (1010) eine Höhendifferenz (ΔH) zwischen der Oberkante (14) und der Unterkante (34), insbesondere als Differenz aus einer absoluten Höhe (HO) der Oberkante (14) und der absoluten Höhe (HU) der Unterkante (34), ermittelt wird und in dem Justiervorgang (1020) die absolute Höhe (HU) der Unterkante (34) in Abhängigkeit von der Höhendifferenz (ΔH) automatisch erhöht wird.

5. Verfahren nach einem der Ansprüche 3 oder 4,
   **dadurch gekennzeichnet,**

   **dass** die absolute Höhe (HU) der Unterkante (34) erhöht wird, indem eine Stützwinde (36) des Sattelaufliegers (30) ausgefahren wird, insbesondere im Lastgang, und/oder indem eine Luftfederung (38) des Sattelaufliegers (30) entlüftet wird und/oder indem ein Reifendruck mindestens eines Reifens (40) des Sattelaufliegers (30), insbesondere einer letzten Achse, verringert wird und/oder
   **dass** die absolute Höhe (HK) des Königszapfens (32) erhöht wird, indem eine Stützwinde (36) des Sattelaufliegers (30) ausgefahren wird, insbesondere im Lastgang, und/oder indem eine Luftfederung (38) des Sattelaufliegers (30) entlüftet wird und/oder indem ein Reifendruck mindestens eines Reifens (40) des Sattelaufliegers (30), insbesondere einer letzten Achse, verringert wird und/oder
   **dass** die absolute Höhe (HK) des Königszapfens (32) verringert wird, indem eine Stützwinde (36) des Sattelaufliegers (30) eingefahren wird, insbesondere im Lastgang, und/oder indem eine Luftfederung (38) des Sattelaufliegers (30) belüftet wird und/oder indem ein Reifendruck mindestens eines Reifens (40) des Sattelaufliegers (30), insbesondere einer letzten Achse, erhöht wird.

6. Verfahren nach einem der vorhergehenden Ansprüche,
   **dadurch gekennzeichnet,**
   **dass** in dem Analysevorgang (1010) die absolute Höhe (HU) der Unterkante (34) und/oder die absolute Höhe (HO) der Oberkante (14) und/oder die absolute Höhe (HK) des Königszapfens (32) und/oder die absolute Höhe (HS) der Sattelkupplung (12) und/oder die Höhendifferenz (ΔH), insbesondere ohne Ermittlung der absoluten Höhen (HO, HU), von dem Sattelauflieger (30) und/oder von der Sattelzugmaschine (10) ermittelt wird, insbesondere mittels mindestens eines Sensors (17), beispielsweise einer Kamera, eines Abstandssensors und/oder eines Neigungsmessers.

7. Verfahren nach Anspruch 6,
**dadurch gekennzeichnet,**
**dass** von dem Sattelauflieger (30) ermittelte Messwerte an die Sattelzugmaschine (10) und/oder von der Sattelzugmaschine (10) ermittelte Messwerte an den Sattelauflieger (30) übermittelt werden.

8. Verfahren nach einem der vorhergehenden Ansprüche,
**dadurch gekennzeichnet,**
**dass** in dem Analysevorgang (1010) auf Basis der absoluten Höhe (HK) des Königszapfens (32) und/oder der absoluten Höhe (HS) der Sattelkupplung (12) und/oder der absoluten Höhe (HO) der Oberkante (14) und/oder der absoluten Höhe (HU) der Unterkante (34) und/oder der Höhendifferenz (ΔH) ein Differenzwert für die Stützwinde (36), die Luftfederung (38) und/oder den die Reifen (40) ermittelt, wobei zur Ermittlung des Differenzwerts insbesondere aufliegerspezifische Kennwerte herangezogen werden.

9. Verfahren nach einem der vorhergehenden Ansprüche,
**dadurch gekennzeichnet,**
**dass** nach jedem Justiervorgang (1020) ein Analysevorgang (1010) durchgeführt wird.

10. Sattelzug (100) mit einer Sattelzugmaschine (10), insbesondere einer autonomen Sattelzugmaschine (10), und einem Sattelauflieger (30), wobei die Sattelzugmaschine (10) eine Sattelkupplung (12) und der Sattelauflieger (30) einen Königszapfen (32) umfasst, wobei die Sattelkupplung (12) und der Königszapfen (32) in einem Kuppelvorgang (1030) derart miteinander kuppelbar sind, dass die Sattelzugmaschine (10) den Sattelauflieger (30) bewegen kann, wobei der Sattelauflieger (30) ein Hubsystem umfasst, mittels dem zumindest ein Teil des Sattelaufliegers (30) um eine Querachse (Y) kippbar und optional eine absolute Höhe (HK) des Königszapfens (32) einstellbar ist,
**dadurch gekennzeichnet,**

   **dass** die Sattelzugmaschine (10) und/oder der Sattelauflieger (30) mindestens einen Sensor (17, 37) und mindestens eine Steuereinrichtung (15, 35) aufweist,
   **dass** der Sensor (17, 37) eingerichtet ist, eine absolute Höhe (HO) einer Oberkante (14) der Sattelkupplung (12) und/oder eine absolute Höhe (HU) einer Unterkante (34) des Sattelaufliegers (30) und/oder eine absolute Höhe (HK) des Königszapfens (32) und/oder eine absolute Höhe (HS) der Sattelkupplung (12) und/oder eine Höhendifferenz (ΔH) zwischen der Oberkante (14) und der Unterkante (34) und/oder eine Höhendifferenz (ΔH) zwischen dem Königszapfen (32) und der Sattelkupplung (12) zu erfassen und dass die Steuereinrichtung (15, 35) eingerichtet ist, das Hubsystem in Abhängigkeit von einem Signal des Sensors (17, 37) zu betätigen.

11. Sattelzug (100) nach Anspruch 10,
**dadurch gekennzeichnet,**
**dass** das Hubsystem des Sattelaufliegers (30) mindestens eine Stützwinde (36) und/oder eine Luftfederung (38), insbesondere Luftbälge mindestens einer Achse, Reifen (40) mindestens einer Achse, mindestens einen Kompressor und/oder mindestens ein steuerbares Ventil umfasst.

12. Sattelzug (100) nach Anspruch 10 oder 11,
**dadurch gekennzeichnet,**
**dass** die Sattelzugmaschine (10) und der Sattelauflieger (30) jeweils mindestens eine Kommunikationseinheit (13, 33) aufweisen, wobei die Kommunikationseinheiten (13, 33) eingerichtet sind, miteinander zu kommunizieren.

13. Sattelzug (100) nach einem der Ansprüche 10 bis 12,
**dadurch gekennzeichnet,**

   **dass** die Kommunikationseinheit (13) der Sattelzugmaschine (10) ein Sender ist und die Kommunikationseinheit (33) des Sattelaufliegers (30) ein Empfänger ist oder
   **dass** die Kommunikationseinheit (13) der Sattelzugmaschine (10) ein Empfänger ist und die Kommunikationseinheit (33) des Sattelaufliegers (30) ein Sender ist oder
   **dass** zumindest eine der Kommunikationseinheiten (13, 33) eine kombinierte Sender-Empfänger-Einheit, insbesondere ein Transponder ist.

## Claims

1. A method for coupling a tractor (10), in particular an autonomous tractor (10), to a semi-trailer (30), in which a fifth wheel (12) of the tractor (10) is connected to a king pin (32) of the semi-trailer (30) in a coupling procedure (1030) in such a way that the tractor (10) can move the semi-trailer (30), in particular pull it,

**characterized in that,**
before the coupling procedure (1030), it is determined in an analysis procedure (1010) whether the coupling procedure (1030) is feasible and, if not, at least part of the semi-trailer (30) is automatically tilted about a transverse axis (Y) in an adjustment procedure (1020) and optionally an absolute height of the king pin (32) is automatically changed.

2. The method according to claim 1,
**characterized in that**
in the analysis procedure (1010) it is determined whether an upper edge (14) of the fifth wheel (12), in particular a rear upper edge (14) of the fifth wheel (12), is higher or lower in the vertical direction than a lower edge (34) of the semi-trailer (30), in particular a front lower edge (34) of a trailer frame (31), and/or that it is determined in the analysis procedure (1010) whether the fifth wheel (12) and the king pin (32) are arranged in the vertical direction in such a way that the subsequent coupling procedure (1030) is feasible, it being determined in particular whether the king pin (32) is too low or too high in the vertical direction relative to the fifth wheel (12).

3. The method according to claim 2,
**characterized in that**
in the adjustment procedure (1020) an absolute height (HK) of the king pin (32) in the vertical direction is automatically increased if it has been determined in the analysis procedure (1010) that the king pin (32) is too low relative to the fifth wheel (12) and/or that in the adjustment procedure (1020) the absolute height (HK) of the king pin (32) in the vertical direction is automatically decreased, if it has been determined in the analysis procedure (1010) that the king pin (32) is too high relative to the fifth wheel (12) and/or **in that** an absolute height (HU) of the lower edge (34) is automatically increased in the adjustment procedure (1020) if it has been determined in the analysis procedure (1010) that the upper edge (14) of the fifth wheel (12) is arranged higher in the vertical direction than the lower edge (34).

4. The method according to one of the preceding claims,
**characterized in that**
in the analysis procedure (1010) a height difference (ΔH) between the fifth wheel (12) and the king pin (32) is determined, in particular as a difference between an absolute height (HS) of the fifth wheel (12) and an absolute height of the king pin (32), and **in that** in the adjustment procedure (1020) the absolute height (HK) of the king pin (32) is automatically increased or decreased as a function of the height difference (ΔH) and/or in that in the analysis procedure (1010) a height difference (ΔH) between the upper edge (14) and the lower edge (34) is determined, in particular as the difference between an absolute height (HO) of the upper edge (14) and the absolute height (HU) of the lower edge (34), and the absolute height (HU) of the lower edge (34) is automatically increased in the adjustment procedure (1020) as a function of the height difference (ΔH).

5. The method according to one of claims 3 or 4,
**characterized in that**
the absolute height (HU) of the lower edge (34) is increased by extending a landing gear (36) of the semi-trailer (30), in particular in the load gear, and/or by de-aerating an air suspension (38) of the semi-trailer (30) and/or by reducing a tire pressure of at least one tire (40) of the semi-trailer (30), in particular of a last axle, and/or in that the absolute height (HK) of the king pin (32) is increased by extending a landing gear (36) of the semi-trailer (30), in particular in the load gear, and/or by de-aerating an air suspension (38) of the semi-trailer (30) and/or by reducing a tire pressure of at least one tire (40) of the semi-trailer (30), in particular of a last axle, and/or in that the absolute height (HK) of the king pin (32) is reduced by retracting a landing gear (36) of the semi-trailer (30), in particular in the load gear, and/or by aerating an air suspension (38) of the semi-trailer (30) and/or by increasing a tire pressure of at least one tire (40) of the semi-trailer (30), in particular of a last axle.

6. The method according to one of the preceding claims,
**characterized in that**
in the analysis procedure (1010) the absolute height (HU) of the lower edge (34) and/or the absolute height (HO) of the upper edge (14) and/or the absolute height (HK) of the king pin (32) and/or the absolute height (HS) of the fifth wheel (12) and/or the height difference (ΔH), in particular without determining the absolute heights (HO, HU), is determined by the semi-trailer (30) and/or by the tractor (10), in particular by means of at least one sensor (17), for example a camera, a distance sensor and/or an inclinometer.

7. The method according to claim 6,
**characterized in that**
measured values determined by the semi-trailer (30) are transmitted to the tractor (10) and/or measured values determined by the tractor (10) are transmitted to the semi-trailer (30).

8. The method according to one of the preceding claims,
**characterized in that**
in the analysis procedure (1010), based on the absolute height (HK) of the king pin (32) and/or the absolute height (HS) of the fifth wheel (12) and/or the absolute height (HO) of the upper edge (14) and/or the absolute height (HU) of the lower edge (34) and/or the height difference (ΔH), a difference value for the landing gear (36), the air suspension (38) and/or the tires (40) is determined, with trailer-specific characteristic values being used in particular to determine the difference value.

9. The method according to one of the preceding claims,
   **characterized in that**
   an analysis procedure (1010) is carried out after each adjustment procedure (1020).

10. A semi-truck (100) with a tractor (10), in particular an autonomous tractor (10), and a semi-trailer (30), wherein the tractor (10) comprises a fifth wheel (12) and the semi-trailer (30) comprises a king pin (32), wherein the fifth wheel (12) and the king pin (32) can be coupled to each other in a coupling process (1030) in such a way, that the tractor (10) can move the semi-trailer (30), wherein the semi-trailer (30) comprises a lifting system by means of which at least a part of the semi-trailer (30) can be tilted about a transverse axis (Y) and optionally an absolute height (HK) of the king pin (32) can be adjusted,
    **characterized in that**

    the tractor (10) and/or the semi-trailer (30) comprises at least one sensor (17, 37) and at least one control device (15, 35),
    that the sensor (17, 37) is configured to detect an absolute height (HO) of an upper edge (14) of the fifth wheel (12) and/or an absolute height (HU) of a lower edge (34) of the semi-trailer (30) and/or an absolute height (HK) of the king pin (32) and/or an absolute height (HS) of the fifth wheel (12) and/or a height difference (ΔH) between the upper edge (14) and the lower edge (34) and/or a height difference (ΔH) between the king pin (32) and the fifth wheel (12), and
    **in that** the control device (15, 35) is configured to actuate the lifting system depending on a signal from the sensor (17, 37).

11. The semi-truck (100) according to claim 10,
    **characterized in that**
    the lifting system of the semi-trailer (30) comprises at least one landing gear (36) and/or an air suspension (38), in particular air bellows of at least one axle, tires (40) of at least one axle, at least one compressor and/or at least one controllable valve.

12. The semi-truck (100) according to claim 10 or 11,
    **characterized in that**
    the tractor (10) and the semi-trailer (30) each comprise at least one communication unit (13, 33), the communication units (13, 33) being configured to communicate with each other.

13. The semi-truck (100) according to one of claims 10 to 12,
    **characterized in that**

    the communication unit (13) of the tractor (10) is a transmitter and the communication unit (33) of the semi-trailer (30) is a receiver, or
    **in that** the communication unit (13) of the tractor (10) is a receiver and the communication unit (33) of the semi-trailer (30) is a transmitter, or
    **in that** at least one of the communication units (13, 33) is a combined transmitter-receiver unit, in particular a transponder.

**Revendications**

1. Procédé d'attelage d'un tracteur pour semi-remorque (10), en particulier d'un tracteur pour semi-remorque (10) autonome, comprenant une semi-remorque (30) pour laquelle une sellette d'attelage (12) du tracteur pour semi-remorque (10) est reliée à un pivot d'attelage (32) de la semi-remorque (30) lors d'une opération d'attelage (1030), de façon telle que le tracteur pour semi-remorque (10) peut déplacer, en particulier tracter, la semi-remorque (30),
   **caractérisé en ce que,**
   avant l'opération d'attelage (1030), une opération d'analyse (1010) permet de déterminer si l'opération d'attelage (1030) peut être mise en œuvre, et si ce n'est pas le cas, au moins une partie de la semi-remorque (30) est automatiquement basculée autour d'un axe transversal (Y) au cours d'une opération d'ajustement (1020), et une hauteur absolue du pivot d'attelage (32) est éventuellement modifiée de manière automatique.

2. Procédé selon la revendication 1,
   **caractérisé en ce que,**
   l'opération d'analyse (1010) permet de déterminer si un bord supérieur (14) de la sellette d'attelage (12), en particulier un bord supérieur arrière (14) de la sellette d'attelage (12), est agencé dans le sens vertical plus haut ou plus bas qu'un bord inférieur (34) de la semi-remorque (30), en particulier qu'un bord inférieur avant (34) d'un châssis de semi-remorque (31), et/ou **en ce que** l'opération d'analyse (1010) permet de déterminer si la sellette d'attelage (12) et le pivot d'attelage (32) sont agencés dans le sens vertical de façon telle que l'opération d'attelage (1030) qui suit peut être mise en œuvre, dans lequel l'opération d'analyse permet de déterminer en particulier si le pivot d'attelage (32) est trop bas ou trop haut dans le sens vertical par rapport à la sellette d'attelage (12).

3. Procédé selon la revendication 2,

**caractérisé en ce que,**

au cours de l'opération d'ajustement (1020), une hauteur absolue (HK) du pivot d'attelage (32) est automatiquement augmentée dans le sens vertical si l'opération d'analyse (1010) a permis de déterminer que le pivot d'attelage (32) est trop bas par rapport à la sellette d'attelage (12) et/ou **en ce que**, au cours de l'opération d'ajustement (1020), la hauteur absolue (HK) du pivot d'attelage (32) est automatiquement diminuée dans le sens vertical si l'opération d'analyse (1010) a permis de déterminer que le pivot d'attelage (32) est trop haut par rapport à la sellette d'attelage (12) et/ou **en ce que**, au cours de l'opération d'ajustement (1020), une hauteur absolue (HU) du bord inférieur (34) est automatiquement augmentée si l'opération d'analyse (1010) a permis de déterminer que le bord supérieur (14) de la sellette d'attelage (12) est agencé plus haut que le bord inférieur (34) dans le sens vertical.

4. Procédé selon l'une des revendications précédentes,
   **caractérisé en ce que,**

   au cours de l'opération d'analyse (1010), une différence de hauteur (ΔH) entre la sellette d'attelage (12) et le pivot d'attelage (32) est déterminée, en particulier sous forme de différence entre une hauteur absolue (HS) de la sellette d'attelage (12) et une hauteur absolue du pivot d'attelage (32), et, au cours de l'opération d'ajustement (1020), la hauteur absolue (HK) du pivot d'attelage (32) est automatiquement augmentée ou diminuée en fonction de la différence de hauteur (ΔH) et/ou
   au cours de l'opération d'analyse (1010), une différence de hauteur (ΔH) entre le bord supérieur (14) et le bord inférieur (34) est déterminée, en particulier sous forme de différence entre une hauteur absolue (HO) du bord supérieur (14) et la hauteur absolue (HU) du bord inférieur (34), et, au cours de l'opération d'ajustement (1020), la hauteur absolue (HU) du bord inférieur (34) est automatiquement augmentée en fonction de la différence de hauteur (ΔH).

5. Dispositif selon l'une des revendications 3 ou 4,
   **caractérisé en ce que**

   la hauteur absolue (HU) du bord inférieur (34) est augmentée en déployant un bras d'appui (36) de la semi-remorque (30), en particulier lors du processus de chargement, et/ou en dégonflant une suspension pneumatique (38) de la semi-remorque (30) et/ou en réduisant la pression de pneumatique d'au moins un pneumatique (40) de la semi-remorque (30), en particulier d'un dernier essieu, et/ou

la hauteur absolue (HK) du pivot d'attelage (32) est augmentée en déployant un bras d'appui (36) de la semi-remorque (30), en particulier lors du processus de chargement, et/ou en dégonflant une suspension pneumatique (38) de la semi-remorque (30) et/ou en réduisant la pression de pneumatique d'au moins un pneumatique (40) de la semi-remorque (30), en particulier d'un dernier essieu, et/ou

la hauteur absolue (HK) du pivot d'attelage (32) est diminuée en rétractant un bras d'appui (36) de la semi-remorque (30), en particulier lors du processus de chargement, et/ou en gonflant une suspension pneumatique (38) de la semi-remorque (30) et/ou en augmentant la pression de pneumatique d'au moins un pneumatique (40) de la semi-remorque (30), en particulier d'un dernier essieu.

6. Procédé selon l'une des revendications précédentes,
   **caractérisé en ce que,**

   au cours de l'opération d'analyse (1010), la hauteur absolue (HU) du bord inférieur (34) et/ou la hauteur absolue (HO) du bord supérieur (14) et/ou la hauteur absolue (HK) du pivot d'attelage (32) et/ou la hauteur absolue (HS) de la sellette d'attelage (12) et/ou la différence de hauteur (ΔH), en particulier sans déterminer les hauteurs absolues (HO, HU), sont déterminées par la semi-remorque (30) et/ou le tracteur pour semi-remorque (10), en particulier au moyen d'au moins un capteur (17), par exemple une caméra, un capteur de distance et/ou un inclinomètre.

7. Procédé selon la revendication 6,
   **caractérisé en ce que**
   les valeurs de mesure déterminées par la semi-remorque (30) sont transmises au tracteur pour semi-remorque (10) et/ou les valeurs de mesure déterminées par le tracteur pour semi-remorque (10) sont transmises à la semi-remorque (30).

8. Procédé selon l'une des revendications précédentes,
   **caractérisé en ce que,**
   au cours de l'opération d'analyse (1010), une valeur de différence pour le bras d'appui (36), la suspension pneumatique (38) et/ou les pneumatiques (40) est déterminée en se basant sur la hauteur absolue (HK) du pivot d'attelage (32) et/ou sur la hauteur absolue (HS) de la sellette d'attelage (12) et/ou sur la hauteur absolue (HO) du bord supérieur (14) et/ou sur la hauteur absolue (HU) du bord inférieur (34) et/ou sur la différence de hauteur (ΔH), suite à quoi on utilise des valeurs caractéristiques en particulier spécifiques à la remorque pour déterminer la valeur de différence.

**9.** Procédé selon l'une des revendications précédentes,
**caractérisé en ce que,**
après chaque opération d'ajustement (1020), on réalise une opération d'analyse (1010).

**10.** Convoi semi-remorque (100) comportant un tracteur pour semi-remorque (10), en particulier un tracteur pour semi-remorque (10) autonome, et une semi-remorque (30), dans lequel le tracteur pour semi-remorque (10) comprend une sellette d'attelage (12), et la semi-remorque (30) comprend un pivot d'attelage (32), dans lequel la sellette d'attelage (12) et le pivot d'attelage (32) peuvent être accouplés l'un à l'autre lors d'une opération d'attelage (1030), de façon telle que le tracteur pour semi-remorque (10) peut déplacer la semi-remorque (30), dans lequel la semi-remorque (30) comprend un système de levage au moyen duquel au moins une partie de la semi-remorque (30) peut être basculée autour d'un axe transversal (Y) et une hauteur absolue (HK) du pivot d'attelage (32) peut éventuellement être ajustée,
**caractérisé en ce que**

le tracteur pour semi-remorque (10) et/ou la semi-remorque (30) présente(nt) au moins un capteur (17, 37) et au moins un dispositif de commande (15, 35), **en ce que** le capteur (17, 37) est conçu pour détecter une hauteur absolue (HO) d'un bord supérieur (14) de la sellette d'attelage (12) et/ou une hauteur absolue (HU) d'un bord inférieur (34) de la semi-remorque (30) et/ou une hauteur absolue (HK) du pivot d'attelage (32) et/ou une hauteur absolue (HS) de la sellette d'attelage (12) et/ou une différence de hauteur ($\Delta$H) entre le bord supérieur (14) et le bord inférieur (34) et/ou une différence de hauteur ($\Delta$H) entre le pivot d'attelage (32) et la sellette d'attelage (12) et **en ce que** le dispositif de commande (15, 35) est conçu pour actionner le système de levage en fonction d'un signal du capteur (17, 37).

**11.** Convoi semi-remorque (100) selon la revendication 10, **caractérisé en ce que**
le système de levage de la semi-remorque (30) comprend au moins un bras d'appui (36) et/ou une suspension pneumatique (38), en particulier des soufflets pneumatiques d'au moins un essieu, des pneumatiques (40) d'au moins un essieu, au moins un compresseur et/ou au moins une soupape pouvant être commandée.

**12.** Convoi semi-remorque (100) selon la revendication 10 ou 11, **caractérisé en ce que**
le tracteur pour semi-remorque (10) et la semi-remorque (30) présentent respectivement au moins une unité de communication (13, 33), les unités de communication (13, 33) étant conçues pour communiquer entre elles.

**13.** Convoi semi-remorque (100) selon l'une des revendications 10 à 12,
**caractérisé en ce que**

l'unité de communication (13) du tracteur pour semi-remorque (10) est un émetteur et l'unité de communication (33) de la semi-remorque (30) est un récepteur, ou
**en ce que** l'unité de communication (13) du tracteur pour semi-remorque (10) est un récepteur et l'unité de communication (33) de la semi-remorque (30) est un émetteur, ou
**en ce qu'**au moins une des unités de communication (13, 33) est une unité émetteur-récepteur combinée, en particulier un transpondeur.

Fig. 1

EP 4 338 986 B1

Fig. 2

Fig. 3

EP 4 338 986 B1

Fig. 4

Fig. 5

EP 4 338 986 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102019202352 A1
- SE 2051032 A1
- DE 102020210346 A1
- KR 20200060650 A
- WO 9950129 A1
- EP 2928735 A1